# FASCICULE DE BREVET EUROPEEN

(11) **EP 1 202 634 B1**
(45) Date de publication et mention de la délivrance du brevet: **07.12.2005**
(21) Numéro de dépôt: 00948057.5
(22) Date de dépôt: 22.06.2000
(51) Int. Cl.: A23C 19/16, C11C 3/00

(54) **COMPOSITION D'ENROBAGE POUR FROMAGES**
ZUSAMMENSETZUNG ZUM ÜBERZIEHEN VON KÄSE
CHEESE COATING COMPOSITION

(30) Priorité: 21.07.1999 FR 9909462
(43) Date de publication de la demande: 08.05.2002
(73) Titulaire: FROMAGERIES BEL, 75008 Paris (FR)
(72) Inventeur: CHASSAGNE, Marie-Hélène, 41100 Marcilly (FR); IMBERT, Annie, F-94400 Vitry sur Seine (FR); GRAILLE, Jean, 34070 Montpellier (FR); PINA, Michel, 34080 Montpellier (FR); Laurent, Serge, 34000 Montpellier (FR)
(74) Mandataire: Bernasconi, Jean Raymond
(86) Numéro de dépôt international: PCT/FR2000/001742
(87) Numéro de publication internationale: WO 2001/005240

(56) Documents cités:
- EP-A- 0 811 664
- DATABASE WPI Section Ch, Week 198127 Derwent Publications Ltd., London, GB; Class A96, AN 1981-48656D XP002134807 & JP 56 056223 A (NIPPON SURFACTANT KK), 18 mai 1981 (1981-05-18)

## Description

La présente invention concerne un procédé d'enrobage de fromages. Elle concerne également des compositions d'enrobages de fromages nouvelles ainsi qu'un procédé de fabrication de ces enrobages.

Certains fromages plus particulièrement des fromages à pâte pressée, sont conservés sous un enrobage protecteur évitant d'une part la dessication du fromage d'autre part l'altération du fromage par des moisissures. Plusieurs types d'enrobage sont largement utilisés à cette fin ou ont été décrits à cet effet.

On peut citer notamment :
- des enduits à base de matériaux plastiques synthétique(s) de type polymère d'acétate de vinyle ; dans ce cas l'enrobage est relativement perméable à l'eau et aux gaz ; par ailleurs cet enrobage ou enduit est généralement peu épais, adhérent à la surface du fromage, il nécessite pour son élimination l'écroûtage du fromage.
- des compositions d'enrobages utilisant avantageusement les propriétés de fusion / cristallisation de leurs constituants lesquels sont liquides aux températures d'enduction par trempage ou pulvérisation des fromages (45 à 90°C) et cireux et solides à température ambiante.

Ces matériaux doivent présenter un caractère plastique et malléable, être peu cassants et ne pas adhérer au fromage lors de leur élimination au moment de la consommation des fromages.

Ces compositions sont généralement constituées d'une ou de plusieurs couches d'épaisseur variable de cires d'hydrocarbures constituées d'un mélange de paraffines, de cires microcristallines et éventuellement d'huiles minérales. Ce type d'enrobage ainsi que son mode d'application est décrit dans FR 1 453 977.
- des monoglycérides acétylés à l'état fondu qui présentent la propriété de se solidifier sous forme de cristaux polymorphes au cours du refroidissement jusqu'à la température ambiante en donnant des produits cireux, non gras et relativement flexibles. Ces propriétés ont permis de suggérer l'utilisation de ces produits comme enrobages, notamment de fromages.

Ainsi EP 0 141 299 décrit plus particulièrement un enrobage pour fromages constitué d'une première couche interne à base d'un mélange d'esters d'acide acétique de monoglycérides d'acides gras et d'une deuxième couche externe constituée d'une cire traditionnelle pour enrobage de fromage.

EP 0 403 030 décrit une composition d'enrobage de fromages constituée d'un mélange de mono et diglycérides estérifiés par différents acides (acétique, lactique, citrique) et de cires d'origine végétale.

EP 0 679 337 décrit une composition d'enrobage de fromages constituée de monoglycérides acétylés obtenus à partir d'acides gras à longue chaîne (plus de 80 % en poids d'acide stéarique et béhénique) ayant un point de fusion élevé et un temps de solidification court.

Enfin, EP 0 811 664 décrit une composition d'enrobage de fromages comprenant avantageuse des mono et diglycérides d'acides gras associés à une substance résineuse qui est un ester méthylique de colophane hydrogénée, une colophane hydrogénée estérifiée par du glycérol ou un mélange de ceux-ci.

Toutefois, les différentes compositions énumérées ci-dessus présentent des inconvénients lors de leur utilisation comme enrobages de fromages :

Ainsi, les cires d'hydrocarbures, en dépit d'excellentes propriétés fonctionnelles ont un impact environnemental négatif et bien que l'innocuité des catégories d'hydrocarbures utilisées ait été reconnue, leur utilisation est susceptible d'être limitée à plus ou moins longue échéance par les réglementations de certains pays.

Les enrobages constitués majoritairement de mono et diglycérides d'acides gras présentent selon les cas les défauts suivants:
- une résistance mécanique (résistance aux chocs) généralement moins bonne que les cires d'hydrocarbures ;
- un caractère cassant avec une tendance à l'écaillage lors de leur élimination au moment de la consommation du fromage notamment lorsque l'ouverture de l'enrobage est réalisée par une bande (tircel) lorsque des produits à point de fusion élevé obtenu à partir d'acides gras à longue chaîne sont utilisés ;
- un caractère collant et gras au toucher pour des produits obtenus à partir d'acides gras à chaîne plus courte.

Bien que, de manière générale, ces enrobages présentent de bonnes propriétés plastiques à des températures proches de la température ambiante, on constate un moins bon comportement de ces enrobages à des températures nettement supérieures ou inférieures à la température ambiante susceptibles de survenir au cours du cycle de distribution des fromages. Ainsi certains produits apparaissent trop cassants à des températures de l'ordre de 4°C alors que d'autres présentent un caractère très collant avec apparition de "graissage", collage au suremballage, migration éventuelle des colorants, ou de composants glycériques de l'emballage.

Enfin, les constituants de ces enrobages ont une structure chimique très proche de celle des triglycérides du fromage, ce qui peut favoriser leur miscibilité et leur entraînement éventuel vers le fromage accompagné dé l'entraînement de colorant liposoluble ; de plus, ces produits sont sensibles à l'action des lipases présentes dans des fromages comme l'attestent les tests de sensibilité à la lipase pancréatique.

Ces produits étant susceptibles de se dégrader au contact des enzymes des microorganismes du fromage, des défauts de goût peuvent apparaître au cours du vieillissement des fromages.

Par ailleurs, des travaux réalisés par la Demanderesse montrent que des cires obtenues par estérification d'acides gras et d'alcools gras conduisent à des résultats inappropriés pour leur usage comme enrobages de fromage. En effet, bien que ces compositions aient un comportement thermique (courbe de teneur en solides en fonction de la température) proche des cires à fromage à base d'hydrocarbures d'origine pétrolière, les enrobages de fromage réalisés à partir de ces composants sont généralement cassants quelque soit la diversité des chaînes grasses utilisées et ceci même en présence d'additifs divers susceptibles de freiner la cristallisation de ces cires.

Le but de la présente invention est de proposer des enrobages dont les propriétés sont améliorées par rapport aux enrobages décrits dans l'état de la technique, notamment un enrobage ayant des propriétés mécaniques satisfaisantes à température ambiante mais également aux températures extrêmes susceptibles de survenir y compris de manière accidentelle dans le cycle des fromages, qui n'est ni cassant, ni collant, dont les constituants ne migrent pas vers le fromage, qui est d'une innocuité totale et qui peut être détaché facilement lors de la consommation de fromage.

L'invention a ainsi pour objet un procédé d'enrobage de fromages, notamment de fromages à pâte pressée, caractérisé en ce que l'on applique sur des fromages entiers ou des portions de fromage, une composition d'enrobage comprenant de 60 % à 100 % en poids d'un produit d'estérification d'au moins un acide gras et d'au moins un polyol à chaîne ramifiée ayant au moins 5 atomes de carbone et au moins 2 groupes OH.

Le polyol au sens de la présente invention comprend au moins 5 atomes de carbone, le squelette hydrocarboné étant avantageusement saturé. On préfère en particulier les polyols comprenant un groupe néopentylique substitué.

De préférence le polyol selon l'invention répond à la formule générale : 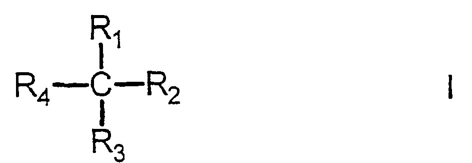 dans laquelle R₁, R₂, R₃, R₄ identiques ou différents sont choisis parmi un groupe alkyle en C₁-C₆, notamment méthyle ou éthyle, ou hydroxyalkyle en C₁-C₆, notamment hydroxyméthyle ; ou R₄ représente un groupe 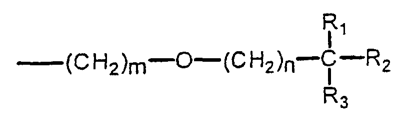 m et n identiques ou différents étant un nombre entier de 1 à 6, avantageusement 1 à 3, de préférence égaux à 1, R₁, R₂ et R₃ étant tels que définis précédemment, sous réserve que deux au moins de R₁ à R₄ représentent un groupe hydroxyalkyle en C₁-C₆.

Parmi les polyols préférés, on peut citer notamment le pentaérythritol, le néopentylglycol, le triméthyloléthane, le triméthylolpropane et le dipentaérythritol, le pentaérythritol étant plus particulièrement préféré.

Les acides gras de la présente invention répondent à la définition généralement acceptée pour ces composés à savoir des acides monocarboxyliques contenant uniquement des éléments carbone, hydrogène et oxygène et consistant en un radical hydrocarbyle de préférence alkyle attaché au groupe carboxyle. Parmi ceux-ci, on préfère généralement les acides gras saturés de formule générale CnH₂nO₂. L'acide méthanoïque et l'acide éthanoïque sont les deux membres les plus petits de la série, laquelle comprend également les acides palmitique et stéarique. Les acides gras au sens de l'invention englobent également les acides de la série oléique à savoir de formule CnH₂ₙ₋₂O₂ comprenant une double liaison, parmi lesquelles l'acide acrylique représente celui ayant le plus petit nombre d'atomes de carbone.

On peut également citer la série de l'acide linoléique de formule CnH₂ₙ₋₄O₂ comprenant deux double liaisons et la série de l'acide linolénique de formule CH₂ₙ₋₆O₂ comprenant trois double liaisons.

Il existe également des acides gras naturels ayant quatre doubles liaisons ou plus, ainsi que des acides gras comportant des groupements hydroxyles dans la molécule et des acides gras cycliques. Tous les acides gras qui viennent d'être mentionnés sont inclus dans la présente invention.

De préférence, le produit d'estérification des acides gras et du polyol, représentant le composant principal de l'enrobage est obtenu par estérification du polyol décrit précédemment avec au moins un acide gras appartenant aux deux groupes différents suivants :
- (A) au moins un acide gras d'un premier groupe ayant une plage de fusion élevée (aux alentours de 70-80°C) ; et
- (B) au moins un acide gras d'un second groupe ayant une plage de fusion basse (aux alentours de 24-30°C), l'écart de plages de fusion des groupes (A) et (B) étant d'au moins 40°C, avantageusement d'au plus 60°C.

Le groupe d'acides gras (A) comprend généralement des acides gras saturés ou insaturés comportant plus de douze atomes de carbone.

Ces derniers sont avantageusement choisis parmi les acides gras hydrogénés de palme et de colza et de préférence parmi lés acides gras d'huile de colza riches en acide béhénique.

Le groupe d'acides gras (B) comprend avantageusement des gras saturés ou insaturés ayant de 1 à 12 atomes de carbone ils sont choisis avantageusement pami les acides gras de coprah hydrogéné, l'acide octanoïque, l'acide décanoïque et leurs mélanges.

Le groupe d'acides gras (B) comprend également les acides acétique et lactique.

La quantité d'acides gras (B) représente avantageusement de 0 à 50 % en poids du poids total des acides gras présents dans l'ester de polyol et la quantité d'acides gras (A) représentent généralement de 50 à 100 % en poids par rapport au poids total des acides gras de la composition d'enrobage.

On préfère choisir le rapport molaire (B)/(A) de façon à ce qu'il soit compris entre 0,8 et 1,5, avantageusement entre 1 et 1,3.

Les meilleurs résultats sont obtenus avec des enrobages comprenant également un acide polycarboxylique celui-ci étant présent de préférence sous la forme d'un produit d'estérification du polyol tel que décrit ci-dessus et des acides gras (A) et (B) tels que décrits ci-dessus.

L'acide polycarboxylique est avantageusement un acide dicarboxylique. Avantageusement l'acide dicarboxylique comprend de 2 à 16 atomes de carbone, de préférence de 2 à 12 atomes de carbone et une chaîne hydrocarbonée insaturée ou de préférence saturée avantageusement polyalkylène éventuellement substituée par des groupes hydroxyles ou oxo.

On peut citer en particulier les acides sébacique, adipique, succinique, malique et oxalique.

La quantité d'acide polycarboxylique avantageusement dicarboxylique peut aller jusqu'à 20 % de la composition finale, celui-ci étant présent sous forme libre ou avantageusement au moins partiellement et jusqu'à totalement estérifiée avec le polyol décrit ci-dessus.

La présence de l'acide polycarboxylique permet notamment de réduire le caractère cassant à basse température des enrobages. Selon la nature de l'acide polycarboxylique, notamment dicarboxylique, utilisé, le taux d'incorporation de celui-ci dans l'ester de polyol varie entre 3 et 20 % et de préférence entre 3 et 10 % par rapport au poids total initial de l'acide polycarboxylique présent dans le mélange réactionnel.

Les propriétés les plus intéressantes sont obtenues lorsque l'acide carboxylique est un acide dicarboxylique comprenant un nombre d'atome de carbone faible de préférence inférieur à 6. Parmi les acides préférés figurent l'acide oxalique et l'acide malique. Les inventeurs pensent sans être liés par cette théorie, que l'introduction des acides dicarboxyliques augmente la flexibilité des molécules du produit d'estérification, soit par condensation des esters sur eux-mêmes grâce à la présence d'une fonction réactive supplémentaire portée par l'acide dicarboxylique ou polycarboxylique, soit simplement par estérification d'une fonction alcool du polyol par un acide dicarboxylique à chaîne courte.

La quantité d'acide polycarboxylique ajoutée dans le mélange réactionnel de départ est ajustée en fonction du rapport molaire d'acide gras choisi dans la plage décrite ci-dessus.

Des enrobages possédant les caractéristiques les plus remarquables sont obtenus pour un rapport fonctions alcools/fonctions acides supérieur à 1, de préférence entre 1,0 et 2,0, les fonctions acides étant celles des acides gras et le cas échéant du polyacide.

Il est égalemerit possible pour améliorer les propriétés des enrobages de l'invention d'ajouter à ceux-ci une quantité allant jusqu'à 20%, avantageusement comprise entre 5 et 15 % d'un plastifiant. Généralement ces plastifiants sont des matériaux polymères. On peut citer en particulier les copolymères d'acrylate ou de méthylacrylate de butyle et d'éthylène, des copolymères d'acétate de vinyle et d'éthylène, ou d'autres substances polymères miscibles aux substances de base et capable d'influer sur les propriétés rhéologiques de la composition d'enrobage soit au cours du procédé d'enrobage, soit sur les propriétés des enrobages finaux eux-mêmes.

La composition d'enrobage selon l'invention peut également comprendre des colorants.

L'invention a également pour objet une composition d'enrobage pour fromages, caractérisée en ce qu'elle comprend de 60 à 100 % en poids du produit d'estérification d'un polyol à chaîne ramifiée ayant au moins 3 atomes de carbone et au moins 2 groupements OH et
- d'au moins un acide gras (A), et
- d'au moins un acide gras (B),
les acides gras (A) présentant une plage de fusion supérieure à celle des acides gras (B) d'au moins 40° C.

Cette composition d'enrobage a avantageusement les caractéristiques décrites ci-dessus en relation avec le procédé d'enrobage.

L'invention a également pour objet un procédé de préparation d'une composition d'enrobage telle que définie ci-dessus caractérisé en ce que l'on réalise une réaction d'estérification entre au moins un polyol tel que défini précédemment avec au moins un acide gras d'un premier groupe (A) et au moins un acide gras d'un second groupe (B) tels que définis précédemment et éventuellement au moins un acide polycarboxylique, notamment dicarboxylique tel que défini précédemment, avantageusement présents en un rapport molaire B/A compris entre 0,8 et 1,5 avantageusement entre 1 et 1,3, et éventuellement on ajoute au produit d'estérification obtenu un plastifiant compatible avec des aliments, notamment un copolymère d'acrylate ou de méthylacrylate de butyle et d'éthylène, ou un copolymère d'acétate de vinyle et d'éthylène.

La réaction d'estérification est conduite généralement à température élevée, de préférence entre 160 et 250°C, plus avantageusement entre 200 et 230°C, en l'absence de catalyseur. L'absence de catalyseur permet de simplifier les étapes du procédé et notamment d'éviter la décoloration et la nécessité d'une étape supplémentaire d'élimination du catalyseur. Le plastifiant est de préférence ajouté après la réaction d'estérification lors du refroidissement du mélange réactionnel à température plus basse, de préférence aux environs de 150°C. Une étape de désodorisation est généralement conduite après la réaction d'estérification et éventuellement après addition du plastifiant ; elle consiste avantageusement en une distillation neutralisante à une température comprise entre 200 et 300°C sous vide.

On choisira avantageusement la composition du mélange réactionnel dans les plages indiquées précédemment en fonction des propriétés que l'on recherche pour l'enrobage final.

La température de cristallisation est une propriété importante pour l'enrobage des fromages notamment pour permettre une solidification rapide de celui-ci après l'application de la composition d'enrobage sur le fromage entier ou les portions de fromage. Il n'est pas souhaitable d'avoir une température de cristallisation trop élevée, celle-ci pouvant induire des dommages sur le produit au moment de l'enrobage et également conduire à des enrobages finaux cassants.

Les inventeurs ont également mis en évidence le fait que lés esters de polyol selon l'invention n'étaient pas sensibles à l'action de la lipase pancréatique contrairement aux produits de l'état de la technique dérivés du glycérol.

Les exemples suivants sont destinés à illustrer l'invention.

### EXEMPLE 1 :

### Préparation d'une composition d'enrobage selon l'invention.

400 g d'acide béhénique, 200 g d'un mélange d'acide octanoique et décanoique, 120 g d'acide oxalique anhydre et 180 g de pentaérythritol sont introduits dans un réacteur et chauffés à 80-90°C pour obtenir la liquéfaction.

Le produit maintenu sous agitation est chauffé à 198°C pendant six heures. Le produit est ensuite désodorisé en étant porté à 260°C sous 1 à 3 mm de Hg pendant 3 heures. Le flux de vapeur est introduit au centre du réacteur à un débit de 15 ml/100 g de mélange/heure pour assurer l'agitation.

On obtient un produit de couleur crème solide et cireux à température ambiante. Les caractéristiques physiques du produit sont décrites dans l'exemple 1 du tableau I.

### EXEMPLES 2 A 7 :

Comme décrit ci-dessus pour l'exemple 1, on prépare six autres compositions d'enrobage selon l'invention.

Les caractéristiques des enrobages des exemples 1 à 7 ainsi que les caractéristiques d'enrobages de l'état de la technique (exemples comparatifs 1 à 4) sont rapportés au tableau I ci-après.

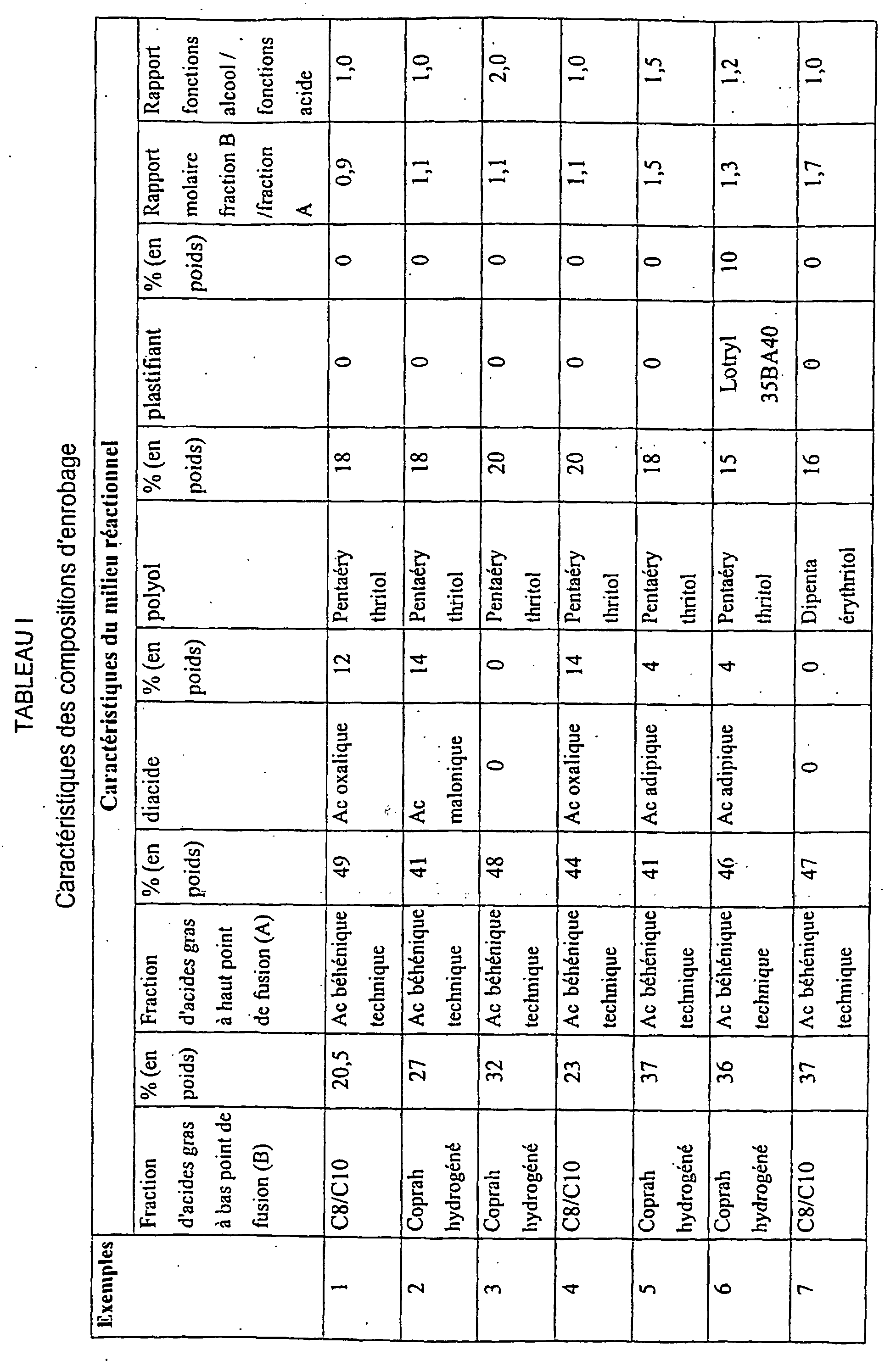

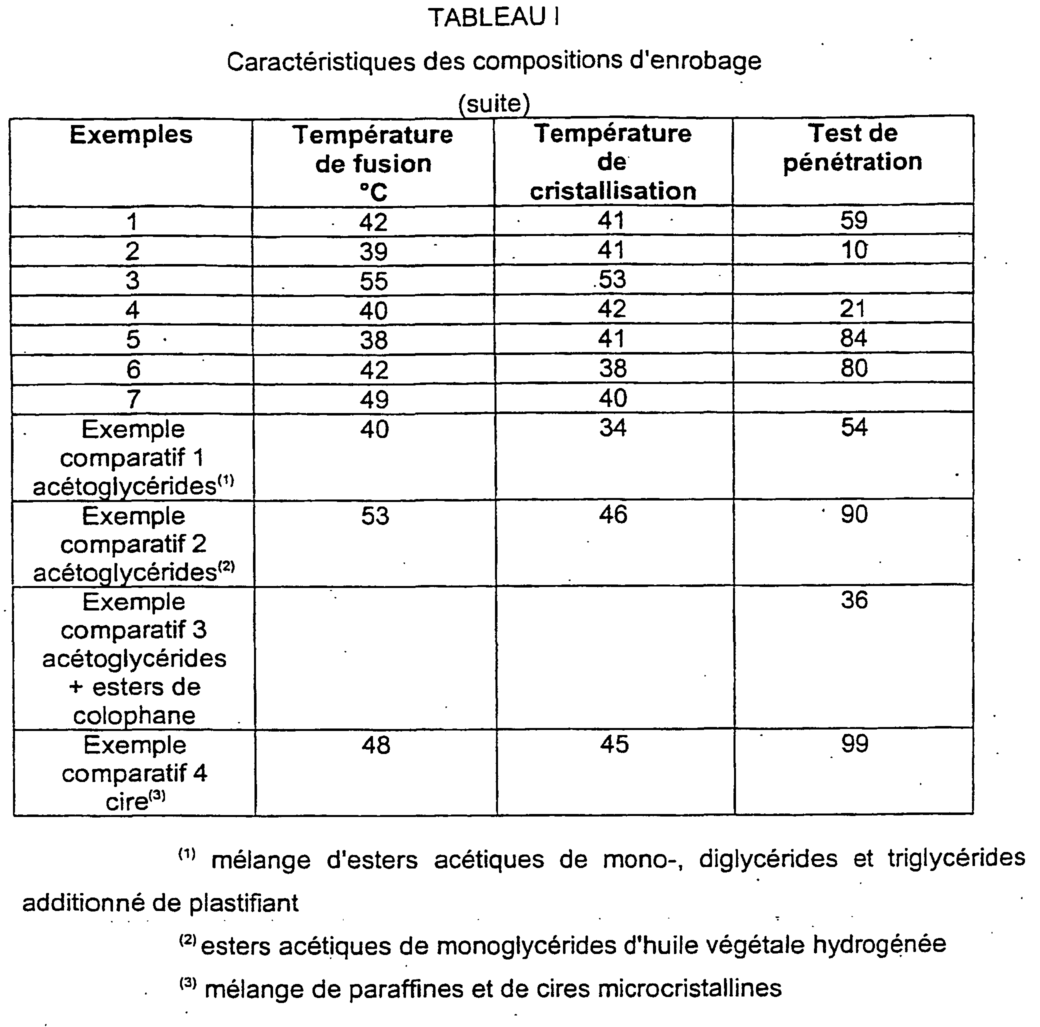

Les caractéristiques rapportées au tableau ont été déterminées selon les méthodes suivantes.
- Mesure des températures de fusion et de cristallisation par analyse enthalpique différentielle avec un cycle de montée en température 2°C min⁻¹
- Test de pénétration ou mesure de la force maximale en fonction du déplacement de la sonde.
- Nombre de fonctions acides par gramme de produit ou acidité : détermination par neutralisation par la potasse du produit dispersé dans un solvant organique.

### EXEMPLES 8 A 15 :

Les compositions des exemples 1 à 7 décrits ci-dessus ont été appliquées sur des fromages à pâte pressée non cuite de petit format, d'environ 20 g par trempage au moyen de un ou deux trempages successifs conformément au protocole suivant :
- Fromages tempérés à 13°C - 15°C pendant environ 2h
- Température du 1^{er} bain 50 - 80°C
- Temps de trempage 0,5 - 2 sec
- Temps de cristallisation : 10 - 15 secondes

- 2^{ème} bain si nécessaire ; après cristallisation immersion des fromages dans un bain d'eau à environ 2°C pendant 10 minutes ; le poids déposé varie entre 3,8 et 4,2.

Les fromages revêtus de leur enrobage sont notés suivant une échelle allant de 0 à 6 :

0 représentant mauvais et 6 très bon.

Pour la notation, les critères suivants ont été pris en compte :
- aspect : l'aspect recherché étant lisse et sec ;
- touché : le touché souhaitable étant sain et non gras ;
- l'arrachage au tircel : l'effet recherché étant une coupe franche et nette sans écaillage de l'enrobage ;
- extraction du fromage : l'effet recherché étant l'extraction facile sans que celui-ci adhère à la coque d'enrobage ;
- résistance aux cassures : il est souhaitable d'obtenir une absence de fissure et de fracture sur la coque d'enrobage par application d'une pression du doigt.

Les résultats sont rapportés dans le tableau II ci-après.

Ces résultats montrent que les enrobages selon l'invention ont un aspect de qualité supérieure aux produits de remplacement de la cire des exemples comparatifs (aspect plus sec, non gras au toucher). Par ailleurs, leurs propriétés d'usage sont stables sur une plage de température plus large que les produits comparatifs correspondant aux plages de température des situations dans lesquelles pourraient se trouver les produits enrobés compte tenu des circuits de distribution de ces produits.

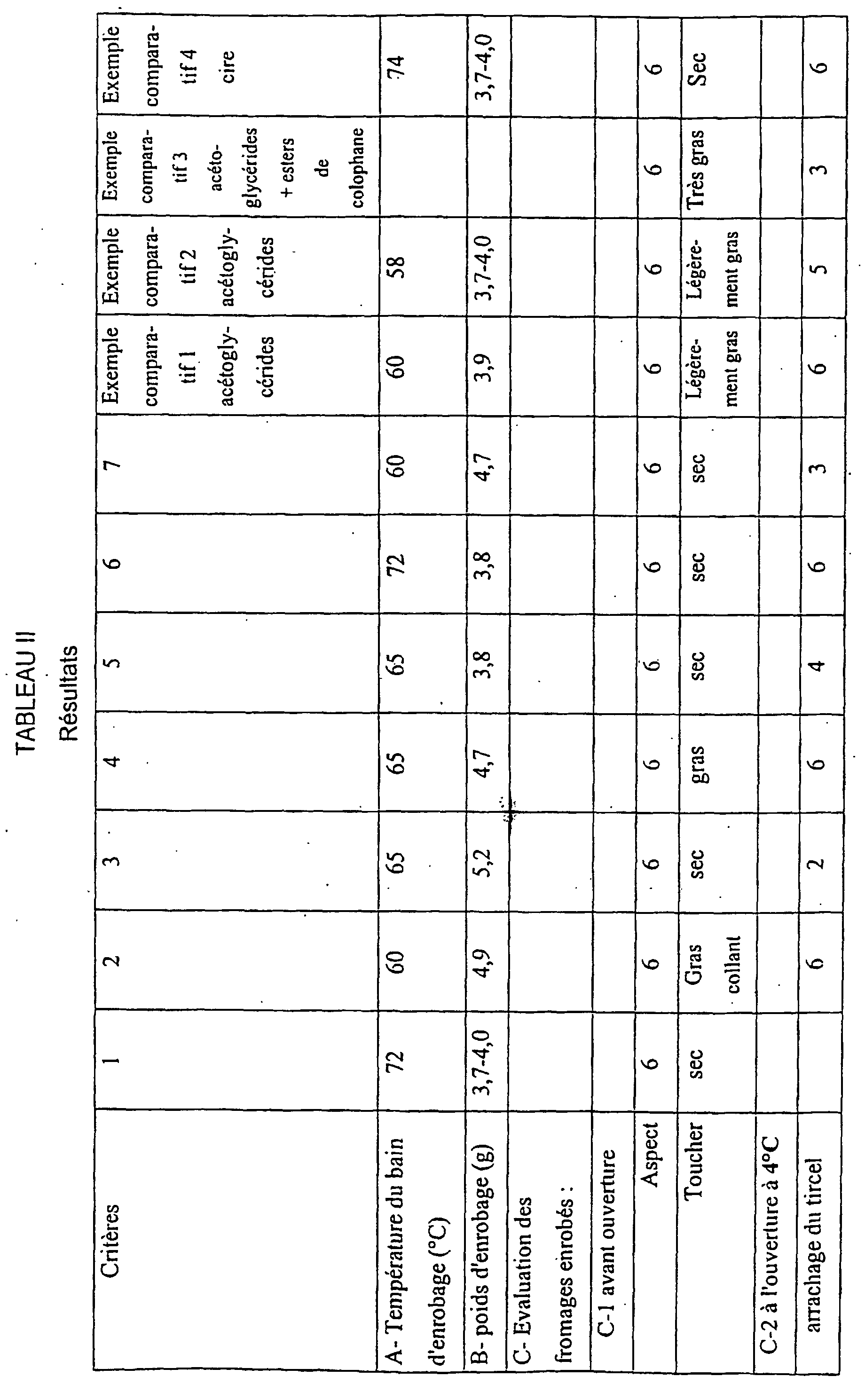

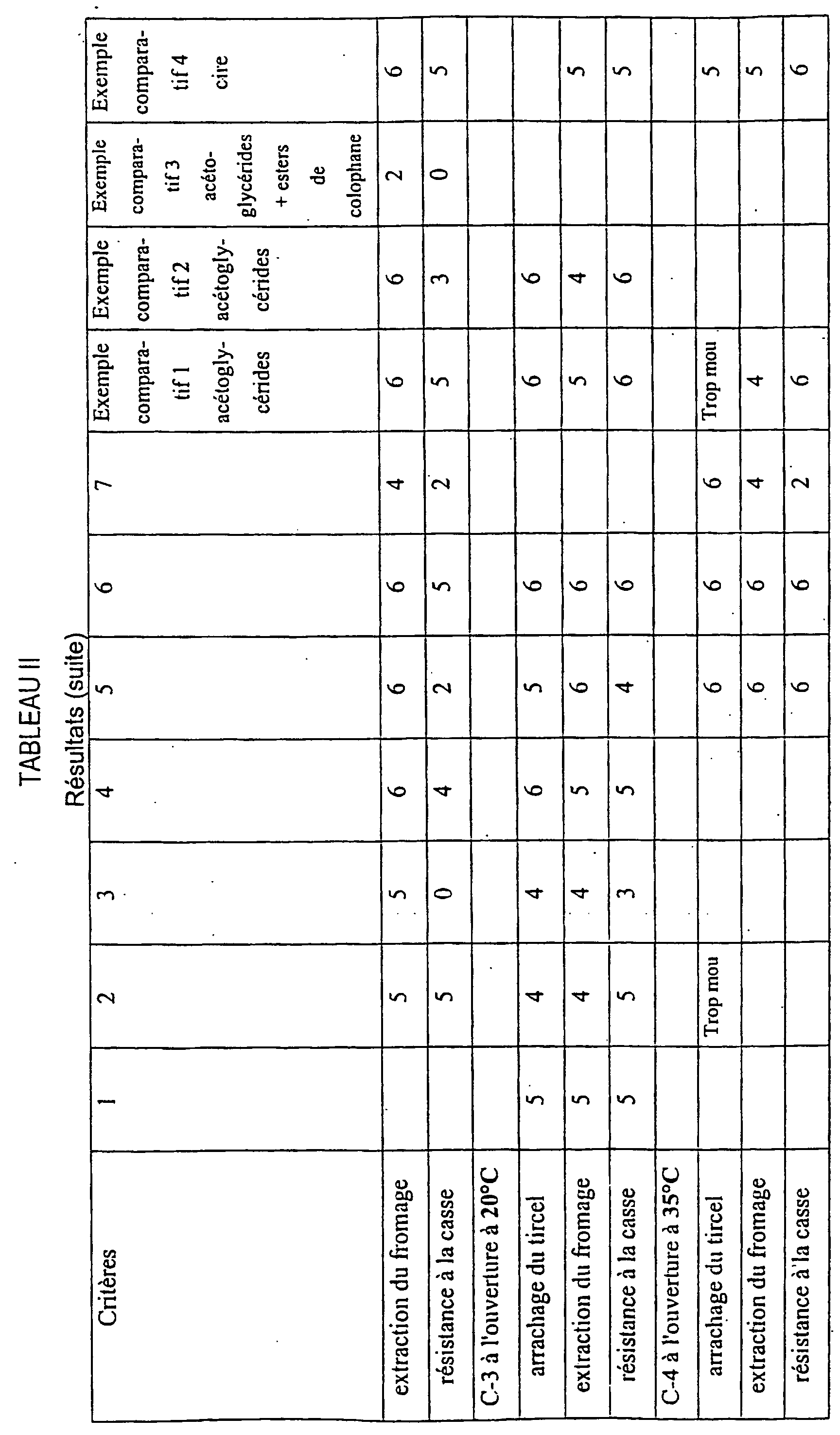

## Revendications

1. Procédé d'enrobage de fromages, notamment de fromages à pâte pressée, **caractérisé en ce que** l'on applique sur des fromages entiers ou des portions de fromage, une composition d'enrobage comprenant de 60 % à 100 % en poids d'un produit d'estérification d'au moins un acide gras et d'au moins un polyol à chaîne ramifiée ayant au moins 5 atomes de carbone et au moins 2 groupes OH.

2. Procédé selon la revendication 1, **caractérisé en ce que** le polyol comprend au moins 5 atomes de carbone et une chaîne hydrocarbonée saturée.

3. Procédé selon la revendication 1 ou la revendication 2, **caractérisé en ce que** le polyol à chaîne ramifiée comprend un groupe néopentylique.

4. Procédé selon l'une quelconque des revendications précédentes, **caractérisé en ce que** le polyol à chaîne ramifiée répond à la formule générale : 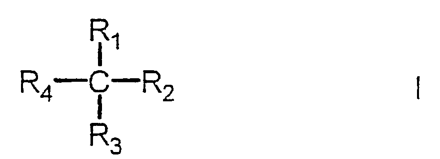 dans laquelle R₁, R₂, R₃, R₄ identiques ou différents sont choisis parmi un groupe alkyle en C₁-C₆, notamment méthyle ou éthyle ou hydroxyalkyle en C₁-C₆, notamment hydroxyméthyle ; ou R₄ représente un groupe 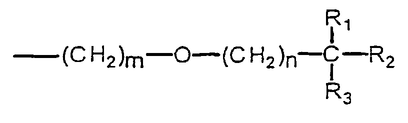 m et n identiques ou différents étant un nombre entier de 1 à 6, avantageusement 1 à 3, de préférence égaux à 1, R₁, R₂ et R₃ étant tels que définis précédemment, sous réserve que deux parmi R₁ à R₄ au moins représentent un groupe hydroxyalkyle en C₁-C₆.

5. Procédé selon la revendication 1, **caractérisé en ce que** le polyol est choisi parmi le pentaerythritol, le néopentylglycol, le triméthyloléthane, le triméthylolpropane, et le dipentaérythritol.

6. Procédé selon la revendication 1, **caractérisé en ce que** les acides gras sont constitués par au moins un premier acide gras d'un groupe (A) et au moins un acide gras d'un second groupe (B), le groupe (A) présentant une plage de fusion supérieure à celle du groupe (B) d'au moins 40°C.

7. Procédé selon la revendication 1, **caractérisé en ce que** les acides gras (A) sont des acides gras saturés ou insaturés ayant plus de 12 atomes de carbone.

8. Procédé selon la revendication 7, **caractérisé en ce que** les acides gras (A) sont choisis parmi les acides gras hydrogénés de palmé et de colza et sont de préférence des acides gras d'huile de colza érucique riche en acide béhénique.

9. Procédé selon la revendication 6, **caractérisé en ce que** les acides gras (B) sont des acides gras saturés ou insaturés ayant de 1 à 12 atomes de carbone.

10. Procédé selon la revendication 9, **caractérisé en ce que** les acides gras (B) sont choisis parmi les acides gras de coprah hydrogénés, l'acide octanoïque, l'acide décanoïque et leurs mélanges.

11. Procédé selon la revendication 10, **caractérisé en ce que** les acides gras (A) sont présents à raison de 50 à 100 % en poids par rapport au poids total des acides gras et les acides gras (B) sont présents à raison de 0 à 50 % en poids par rapport au poids total des acides gras.

12. Procédé selon l'une quelconque des revendications 6 à 10, **caractérisé en ce que** le rapport molaire B/A est compris entre 0,8 et 1,5, de préférence entre 1 et 1,3.

13. Procédé selon l'une quelconque des revendications précédentes, **caractérisé en ce que** l'enrobage comprend au moins un acide polycarboxylique, notamment dicarboxylique en C₃-C₁₆, estérifiée avec le polyol par une ou deux de ses fonctions carboxyliques.

14. Procédé selon là revendication 13, **caractérisé en ce que** l'acide dicarboxylique est choisi parmi l'acide sébacique, l'acide adipique, l'acide succinique, l'acide malique, l'acide oxalique, en une proportion comprise entre 0 et 20% en poids, par rapport au poids total de l'enrobage.

15. Procédé selon l'une quelconque des revendications précédentes, **caractérisé en ce que** le rapport fonction alcool (du polyol) sur fonction acides (des acides gras et de l'acide polycarboxylique) est supérieur à 1 et avantageusement compris entre 1 et 2.

16. Procédé selon l'une des revendications 13 ou 14, **caractérisé en ce que** la composition d'enrobage comprend de 0 à 20 % en poids d'acide polycarboxyfiqué, notamment dicarboxylique par rapport au poids total de la composition d'enrobage.

17. Procédé selon l'une quelconque des revendications précédentes, **caractérisé en ce que** la composition d'enrobage contient un plastifiant compatible avec des aliments notamment un copolymère d'acrylate ou de méthacrylate de butyle et d'éthylène, ou un copolymère d'acétate de vinyle et d'éthylène.

18. Composition d'enrobage pour fromages, **caractérisée en ce qu'**elle comprend de 60 à 100 % en poids du produit d'estérification d'un polyol à chaîne ramifiée ayant au moins 5 atomes de carbone et au moins 2 groupements OH et
- d'au moins un acide gras d'un premier groupe (A), et
- d'au moins un acide gras d'un second groupe (B),
ces acides gras du groupe (A) présentant une plage de fusion supérieure à celle des acides gras du groupe (B) d'au moins 40° C.

19. Composition selon la revendication 18, **caractérisé en ce que** le polyol comprend au moins 5 atomes de carbone et une chaîne hydrocarbonée saturée.

20. Composition selon la revendication 18, **caractérisé en ce que** le polyol à chaîne ramifiée comprend un groupe néopèntylique.

21. Composition selon la revendication 18, **caractérisé en ce que** le polyol à chaîne ramifiée répond à la formule générale : 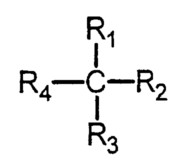 dans laquelle R₁, R₂, R₃, R₄ identiques ou différents sont choisis parmi un groupe alkyle en C₁-C₆, ou hydroxyalkyle en C₁-C₆ ; ou R₄ représente un groupe 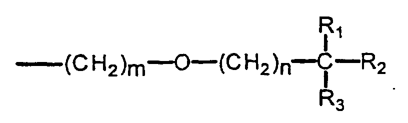 m et n identiques ou différents étant un nombre entier de 1 à 6, avantageusement 1 à 3, de préférence égaux à 1, R₁, R₂ et R₃ étant tels que définis précédemment, sous réserve que deux au moins de R₁ à R₄ représentent un groupe hydroxyalkyle en C₁-C₆.

22. Composition selon la revendication 18, **caractérisé en ce que** le polyol est choisi parmi le pentaerythritol, le néopentylglycol, le triméthyloléthane, le triméthylolpropane, et le dipentaérythritol.

23. Composition selon l'une des revendications 18 à 22, **caractérisée en ce que** les acides gras (A) sont des acides gras saturés ou insaturés ayant plus de 12 atomes de carbone.

24. Composition selon la revendication 23, **caractérisée en ce que** les acides gras (A) sont choisis parmi les acides gras hydrogénés de palme et de colza et sont de préférence des acides gras d'huile de colza riche en acide béhénique.

25. Composition selon l'une quelconque des revendications 18 à 24, **caractérisée en ce que** les acides (B) sont des acides saturés ou insaturés ayant de 1 à 12 atomes de carbone.

26. Composition selon la revendication 25, **caractérisée en ce que** les acides carboxyliques (B) sont choisis parmi les acides gras de coprah hydrogénée, l'acide octanoïque, l'acide décanoïque et leurs mélanges.

27. Composition selon l'une quelconque des revendications 18 à 26, **caractérisée en ce que** (A) est présent à raison de 50 à 75 % en poids par rapport au poids total des acides gras et (B) est présent à raison de 50 à 100 % en poids par rapport au poids total des acides gras.

28. Composition selon l'une quelconque des revendications 18 à 27, **caractérisée en ce que** le rapport molaire A/B est compris entre 0,8 et 1,5, de préférence entre 1 et 1,3.

29. Composition selon l'une quelconque des revendications 18 à 28, **caractérisée en ce qu'**elle comprend en outre de 0 à 20 %, avantageusement de 3 à 10 % en poids d'un acide polycarboxylique, notamment un acide dicarboxylique, notamment en C₃-C₁₆, l'acide dicarboxylique étant présent sous forme libre et/ou estérifiée avec le polyol.

30. Composition selon l'une quelconque des revendications 18 à 29, **caractérisée en ce que** le rapport nombre de fonctions alcool (du polyol) sur nombre de fonctions acides (des acides gras et de l'acide polycarboxylique) est supérieur à 1, avantageusement compris entre 1 et 2.

31. Composition selon l'une quelconque des revendications 18 à 30, **caractérisée en ce qu'**elle comprend en outre de 0 à 20 %, avantageusement de 3 à 10 % en poids d'un plastifiant compatible avec des aliments, notamment un copolymère d'acrylate ou de méthylacrylate de butyle et d'éthylène; ou un copolymère d'acétate de vinyle et d'éthylène.

32. Procédé de préparation d'une composition d'enrobage selon l'une quelconque des revendications 18 à 31, **caractérisé en ce que** l'on réalise une réaction d'estérification entre au moins un polyol tel que défini aux revendications 1 à 6 avec au moins un acide gras d'un premier groupe (A) et au moins un acide d'un second groupe (B) tels que définis aux revendications 6 à 12 et éventuellement au moins un acide polycarboxylique, notamment dicarboxylique tel que défini aux revendications 13 à 15, et éventuellement on ajoute au produit d'estérification obtenu un plastifiant compatible avec des aliments, notamment un copolymère d'acrylate ou de méthylacrylate de butyle et d'éthylène, ou un copolymère d'acétate de vinyle et d'éthylène.

33. Fromage enrobé comprenant un enrobage obtenu selon le procédé des revendications 1 à 17 ou tel que défini aux revendications 18 à 32.

## Patentansprüche

1. Verfahren zum Überziehen von Käse, insbesondere von Hartkäse, **dadurch gekennzeichnet, daß** man auf den ganzen Käse oder Käseportionen eine Überzugszusammensetzung aufbringt, die 60 Gew.-% bis 100 Gew.-% eines Veresterungsprodukts mindestens einer Fettsäure und mindestens eines verzweigtkettigen Polyols mit mindestens 5 Kohlenstoffatomen und mindestens 2 OH-Gruppen umfaßt.

2. Verfahren gemäß Anspruch 1, **dadurch gekennzeichnet, daß** das Polyol mindestens 5 Kohlenstoffatome und eine gesättigte Kohlenwasserstoffkette umfaßt.

3. Verfahren gemäß Anspruch 1 oder Anspruch 2, **dadurch gekennzeichnet, daß** das verzweigtkettige Polyol eine Neopentylgruppe umfaßt.

4. Verfahren gemäß einem der vorangehenden Ansprüche, **dadurch gekennzeichnet, daß** das verzweigtkettige Polyol der allgemeinen Formel 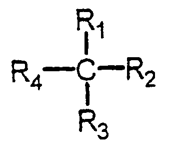 entspricht, worin R₁, R₂, R₃ und R₄ gleich oder verschieden sind und aus einer C₁-C₆-Alkyl-, insbesondere Methyl oder Ethyl oder C₁-C₆-Hydroxyalkylgruppe, insbesondere Hydroxymethyl ausgewählt sind oder R₄ eine Gruppe der Formel 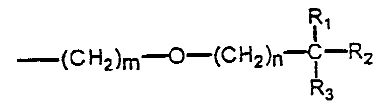 darstellt, wobei m und n gleich oder verschieden sind und eine ganze Zahl von 1 bis 6, vorteilhafterweise 1 bis 3, bevorzugt gleich 1 sind und R₁, R₂ und R₃ wie vorstehend definiert sind, mit der Maßgabe, das mindestens zwei von R₁ bis R₄ eine C₁-C₆-Hydroxyalkylgruppe darstellen.

5. Verfahren gemäß Anspruch 1, **dadurch gekennzeichnet, daß** das Polyol aus Pentaerythrit, Neopentylglykol, Trimethylolethan, Trimethylolpropan und Dipentaerythrit ausgewählt ist.

6. Verfahren gemäß Anspruch 1, **dadurch gekennzeichnet, daß** die Fettsäuren mindestens aus einer ersten Fettsäure aus einer Gruppe (A) und mindestens einer Fettsäure aus einer zweiten Gruppe (B) bestehen, wobei die Gruppe (A) einen mindestens 40°C höheren Schmelzbereich als der der Gruppe (B) aufweist.

7. Verfahren gemäß Anspruch 1, **dadurch gekennzeichnet, daß** die Fettsäuren (A) gesättigte oder ungesättigte Fettsäuren mit mehr als 12 Kohlenstoffatomen sind.

8. Verfahren gemäß Anspruch 7, **dadurch gekennzeichnet, daß** die Fettsäuren (A) aus hydrierten Palm- und Rapsfettsäuren ausgewählt sind und bevorzugt an Behensäure reiche Fettsäuren aus Erucaraps sind.

9. Verfahren gemäß Anspruch 6, **dadurch gekennzeichnet, daß** die Fettsäuren (B) gesättigte oder ungesättigte Fettsäuren mit 1 bis 12 Kohlenstoffatomen sind.

10. Verfahren gemäß Anspruch 9, **dadurch gekennzeichnet, daß** die Fettsäuren (B) aus hydrierten Kokosfettsäuren, Octansäure, Decansäure und ihren Gemischen ausgewählt sind.

11. Verfahren gemäß Anspruch 10, **dadurch gekennzeichnet, daß** die Fettsäuren (A) zu 50 bis 100 Gew.-% bezogen auf das Gesamtgewicht der der Fettsäuren vorliegen und die Fettsäuren (B) zu 0 bis 50 Gew.-% bezogen auf das Gesamtgewicht der Fettsäuren vorliegen.

12. Verfahren gemäß einem der Ansprüche 6 bis 10, **dadurch gekennzeichnet, daß** das Molverhältnis B/A zwischen 0,8 und 1,5, bevorzugt zwischen 1 und 1,3 liegt.

13. Verfahren gemäß einem der vorangehenden Ansprüche, **dadurch gekennzeichnet, daß** der Überzug mindestens eine Polycarbonsäure, insbesondere C₃-C₁₆-Dicarbonsäure umfaßt, die mit dem Polyol über eine oder zwei ihrer Carboxyfunktionen verestert ist.

14. Verfahren gemäß Anspruch 13, **dadurch gekennzeichnet, daß** die Dicarbonsäure aus Sebacinsäure, Adipinsäure, Bernsteinsäure, Äpfelsäure und Oxalsäure in einem Anteil zwischen 0 und 20 Gew.-% bezogen auf das Gesamtgewicht des Überzugs ausgewählt ist.

15. Verfahren gemäß einem der vorangehenden Ansprüche, **dadurch gekennzeichnet, daß** das Verhältnis Alkoholfunktion (des Polyols) zu Säurefunktionen (der Fettsäuren und der Polycarbonsäure) über 1 und vorteilhafterweise zwischen 1 und 2 ist.

16. Verfahren gemäß einem der Ansprüche 13 oder 14, **dadurch gekennzeichnet, daß** die Überzugszusammensetzung 0 bis 20 Gew.-% Polycarbonsäure, insbesondere Dicarbonsäure bezogen auf das Gesamtgewicht der Überzugszusammensetzung umfaßt.

17. Verfahren gemäß einem der vorangehenden Ansprüche, **dadurch gekennzeichnet, daß** die Überzugszusammensetzung einen nahrungsmittelverträglichen Weichmacher, insbesondere ein Copolymer aus Butyl- und Ethylenacrylat oder -methacrylat oder ein Copolymer aus Vinyl- und Ethylenacetat enthält.

18. Überzugszusammensetzung für Käse, **dadurch gekennzeichnet, daß** sie 60 bis 100 Gew.-% des Veresterungsprodukts eines verzweigtkettigen Polyols mit mindestens 5 Kohlenstoffatomen und mindestens zwei OH-Gruppen und
- mindestens einer Fettsäure aus einer ersten Gruppe (A) und
- mindestens einer Fettsäure aus einer zweiten Gruppe (B)
umfaßt, wobei die Fettsäuren der Gruppe (A) einen mindestens 40°C höheren Schmelzbereich als der der Fettsäuren der Gruppe (B) aufweisen.

19. Zusammensetzung gemäß Anspruch 18, **dadurch gekennzeichnet, daß** das Polyol mindestens 5 Kohlenstoffatome und eine gesättigte Kohlenwasserstoffkette umfaßt.

20. Zusammensetzung gemäß Anspruch 18, **dadurch gekennzeichnet, daß** das verzweigtkettige Polyol eine Neopentylgruppe umfaßt.

21. Zusammensetzung gemäß Anspruch 18, **dadurch gekennzeichnet, daß** das verzweigtkettige Polyol der allgemeinen Formel 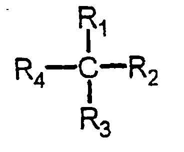 entspricht, worin R₁, R₂, R₃ und R₄ gleich oder verschieden sind und aus einer C₁-C₆-Alkyl- oder C₁-C₆-Hydroxyalkylgruppe ausgewählt sind oder R₄ eine Gruppe der Formel 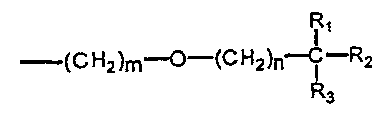 darstellt, wobei m und n gleich oder verschieden sind und eine ganze Zahl von 1 und 6, vorteilhafterweise 1 bis 3, bevorzugt gleich 1 sind und R₁, R₂ und R₃ wie vorstehend definiert sind, mit der Maßgabe, das mindestens zwei von R₁ bis R₄ eine C₁-C₆-Hydroxyalkylgruppe darstellen.

22. Zusammensetzung gemäß Anspruch 18, **dadurch gekennzeichnet, daß** das Polyol aus Pentaerythrit, Neopentylglykol, Trimethylolethan, Trimethylolpropan und Dipentaerythrit ausgewählt ist.

23. Zusammensetzung gemäß einem der Ansprüche 18 bis 22, **dadurch gekennzeichnet, daß** die Fettsäuren (A) gesättigte oder ungesättigte Fettsäuren mit mehr als 12 Kohlenstoffatomen sind.

24. Zusammensetzung gemäß Anspruch 23, **dadurch gekennzeichnet, daß** die Fettsäuren (A) aus hydrierten Palm- und Rapsfettsäuren ausgewählt sind und bevorzugt an Behensäure reiche Fettsäuren aus Rapsöl sind.

25. Zusammensetzung gemäß einem der Ansprüche 18 bis 24, **dadurch gekennzeichnet, daß** die Säuren (B) gesättigte oder ungesättigte Säuren mit 1 bis 12 Kohlenstoffatomen sind.

26. Zusammensetzung gemäß Anspruch 25, **dadurch gekennzeichnet, daß** die Carbonsäuren (B) aus hydrierten Kokosfettsäuren, Octansäure, Decansäure und ihren Gemischen ausgewählt sind.

27. Zusammensetzung gemäß einem der Ansprüche 18 bis 26, **dadurch gekennzeichnet, daß** (A) zu 50 bis 75 Gew.-% bezogen auf das Gesamtgewicht der der Fettsäuren vorliegt und (B) zu 50 bis 100 Gew.-% bezogen auf das Gesamtgewicht vorliegt.

28. Zusammensetzung gemäß einem der Ansprüche 18 bis 27, **dadurch gekennzeichnet, daß** das Molverhältnis A/B zwischen 0,8 und 1,5, bevorzugt zwischen 1 und 1,3 ist.

29. Zusammensetzung gemäß einem der Ansprüche 18 bis 28, **dadurch gekennzeichnet, daß** sie außerdem 0 bis 20 Gew.-%, vorteilhafterweise 3 bis 10 Gew.-% einer Polycarbonsäure, insbesondere einer Dicarbonsäure, insbesondere einer C₃-C₁₆-Dicarbonsäure umfaßt, die in freier Form und/oder mit dem Polyol verestert vorliegt.

30. Zusammensetzung gemäß einem der Ansprüche 18 bis 29, **dadurch gekennzeichnet, daß** das Verhältnis Anzahl der Alkoholfunktionen (des Polyols) zur Anzahl der Säurefunktionen (der Fettsäuren und der Polycarbonsäure) über 1 und vorteilhafterweise zwischen 1 und 2 ist.

31. Zusammensetzung gemäß einem der Ansprüche 18 bis 30, **dadurch gekennzeichnet, daß** sie außerdem 0 bis 20 Gew.-%, vorteilhafterweise 3 bis 10 Gew.-% eines nahrungsmittelverträglichen Weichmachers, insbesondere eines Copolymers aus Butyl- und Ethylenacrylat oder -methacrylat oder eines Copolymers aus Vinyl- und Ethylenacetat umfaßt.

32. Verfahren zur Herstellung einer Überzugszusammensetzung gemäß einem der Ansprüche 18 bis 31, **dadurch gekennzeichnet, daß** man eine Veresterungsreaktion zwischen mindestens einem in den Ansprüchen 1 bis 6 definierten Polyol mit mindestens einer Fettsäure aus einer in den Ansprüchen 6 bis 12 definierten ersten Gruppe (A) und mindestens einer Säure aus einer zweiten Gruppe (B) und gegebenenfalls mindestens einer Polycarbonsäure, insbesondere einer in den Ansprüchen 13 bis 15 definierten Dicarbonsäure durchführt und man gegebenenfalls dem erhaltenen Veresterungsprodukt einen nahrungsmittelverträglichen Weichmachers, insbesondere ein Copolymer aus Butyl- und Ethylenacrylat oder -methacrylat oder ein Copolymer aus Vinyl- und Ethylenacetat zufügt.

33. Überzogener Käse umfassend einen gemäß dem Verfahren der Ansprüche 1 bis 17 erhaltenen oder in den Ansprüchen 18 bis 32 definierten Überzug.

## Claims

1. A method of coating cheeses, in particular pressed cheeses, **characterised in that** there is applied to complete cheeses or to cheese portions a coating composition comprising from 60% to 100% by weight of a product of esterification of at least one fatty acid and at least one ramified-chain polyol having at least five carbon atoms and at least two OH groups.

2. A method according to claim 1, **characterised in that** the polyol comprises at least five atoms of carbon and one saturated hydrocarbon chain.

3. A method according to claim 1 or claim 2, **characterised in that** the ramified chain comprises a neopentyl group.

4. A method according to any one of the preceding claims, **characterised in that** the ramified-chain polyol has the general formula: 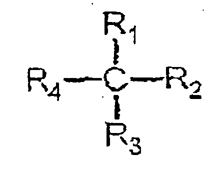 in which R₁, R₂, R₃, R₄ are identical or different and are selected from a C₁-C₆ alkyl group, in particular a C₁-C₆ methyl, ethyl or hydroxyalkyl, in particular hydroxymethyl, group; where R₄ represents a group: 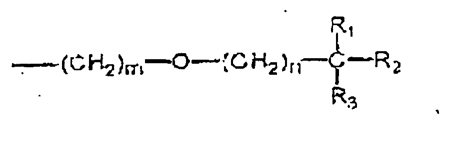 m and n being identical or different and being an integer from 1 to 6, advantageously from 1 to 3, preferably equal to 1, R₁, R₂ and R₃ being as defined above, provided that at least two of R₁ to R₄ represent a C₁-C₆ hydroxyalkyl group.

5. Method according to claim 1, **characterised in that** the polyol is selected from pentaerythritol, neopentylglycol, trimethylolethane, trimethylolpropane and dipentaerythritol.

6. A method according to claim 1, **characterised in that** the fatty acids consist of at least one fatty acid from a group (A) and at least one fatty acid from a second group (B), the group (A) having a liquefaction range at least 40°C greater than that of the group (B).

7. A method according to claim 1, **characterised in that** the fatty acids of the group (A) are saturated or unsaturated fatty acids having more than 12 carbon atoms.

8. A method according to claim 7, **characterised in that** the fatty acids of the group (A) are selected from hydrogenated palm and rape seed fatty acids and are preferably erucic fatty acids from rape seed oil rich in behenic acid.

9. A method according to claim 6, **characterised in that** the fatty acids of the group (B) are saturated or unsaturated fatty acids having from one to 12 carbon atoms.

10. A method according to claim 9, **characterised in that** the fatty acids of the group (B) are selected from hydrogenated coprah fatty acids, octanoic acid, decanoic acid and mixtures thereof.

11. A method according to claim 10, **characterised in that** the fatty acids of the group (A) represent from 50% to 100% by weight of the total weight of the fatty acids and the fatty acids of the group (B) represent from 0% to 50% by weight of the total weight of the fatty acids.

12. A method according to any one of claims 6 to 10, **characterised in that** the molar ratio B/A is from 0.8 to 1.5 and preferably from 1 to 1.3.

13. A method according to any one of the preceding claims, **characterised in that** the coating comprises at least one polycarboxylic acid, in particular C₃-C₁₆ dicarboxylic acid, esterified with polyol by one or two of its carboxylic groups.

14. A method according to claim 13, **characterised in that** the dicarboxylic acid is selected from sebacic acid, adipic acid, succinic acid, malic acid and oxalic acid and represents from 0% to 20% by weight of the total weight of the coating.

15. A method according to any one of the preceding claims, **characterised in that** the ratio of the alcohol group of the polyol to the acid group of the fatty acids and polycarboxylic acid is greater than 1 and advantageously from 1 to 2.

16. A method according to either claim 13 or claim 14, **characterised in that** the coating composition comprises from 0% to 20% by weight of the total weight of the coating composition of polycarboxylic acid, in particular dicarboxylic acid.

17. A method according to any one of the preceding claims, **characterised in that** the coating composition contains a plasticiser compatible with foodstuffs in particular a copolymer of acrylate or methacrylate or butyl and ethylene or a copolymer of vinyl acetate and ethylene.

18. A coating composition for cheeses, **characterised in that** it comprises from 60% to 100% by weight of the product of esterification of a ramified-chain polyol having at least five carbon atoms and at least two OH groups and:
- at least one fatty acid from a first group (A), and
- at least one fatty acid from a second group (B),
the fatty acids of the group (A) having a melting point range at least 40°C greater than that of the fatty acids of the group (B).

19. A composition according to claim 18, **characterised in that** the polyol comprises at least five carbon atoms and one saturated hydrocarbon chain.

20. A composition according to claim 18, **characterised in that** the ramified chain polyol comprises a neopentyl group.

21. A composition according to claim 18, **characterised in that** the ramified-chain polyol has the general formula: 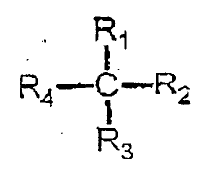 in which R₁, R₂, R₃, R₄ are identical or different and are selected from a C₁-C₆ alkyl group, or a C₁-C₆ hydroxyalkyl group, where R₄ represents a group: 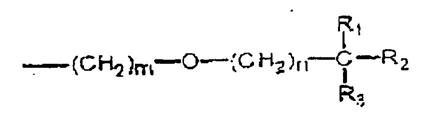 m and n being identical or different and being an integer from 1 to 6, advantageously from 1 to 3, preferably equal to 1, R₁, R₂ and R₃ being as defined above, provided that at least two of R₁ to R₄ represent a C₁-C₆ hydroalkyl group.

22. A composition according to claim 18, **characterised in that** the polyol is selected from pentaerythritol, neopentylglycol, trimethylolethane, trimethylolpropane and dipentaerythritol.

23. A composition according to any one of claims 18 to 22, **characterised in that** the fatty acids (A) are saturated or unsaturated fatty acids having more than 12 carbon atoms.

24. A method according to claim 23, **characterised in that** the fatty acids (A) are selected from hydrogenated palm and rape seed fatty acids and are preferably erucic fatty acids from rape seed oil rich in behenic acid.

25. A method according to any one of claims 18 to 24, **characterised in that** the fatty acids of the group (B) are saturated or unsaturated fatty acids having from one to 12 carbon atoms.

26. A method according to claim 25, **characterised in that** the fatty acids of the group (B) are selected from hydrogenated coprah fatty acids, octanoic acid, decanoic acid and mixtures thereof.

27. A composition according to any one of claims 18 to 26, **characterised in that** the group (A) represents from 50% to 75% by weight of the total weight of the fatty acids and the group (B) represents from 50% to 100% by weight of the total weight of fatty acids.

28. A composition according to any one of claims 18 to 27, **characterised in that** the molar ratio B/A is from 0.8 to 1.5 and preferably from 1 to 1.3.

29. A composition according to any one of claims 18 to 28, **characterised in that** it further comprises from 0% to 20% and advantageously from 3% to 10% by weight of a polycarboxylic acid, in particular a dicarboxylic acid, in particular C₃-C₁₆ dicarboxylic acid, the dicarboxylic acid being present in free form and/or esterified with polyol.

30. A composition according to any one of claims 18 to 29, **characterised in that** the ratio of the alcohol group of the polyol to the acid group of the fatty acids and polycarboxylic acid is greater than 1 and advantageously from 1 to 2.

31. A composition according to any one of claims 18 to 30, **characterised in that** it further comprises from 0% to 20% and advantageously from 3% to 10% by weight of a plasticiser compatible with foodstuffs, in particular a copolymer of acrylate or methacrylate or butyl and ethylene or a copolymer of vinyl acetate and ethylene.

32. A method of preparing a coating composition according to any one of claims 18 to 31, **characterised in that** an esterification reaction is carried out between at least one polyol as defined in claims 1 to 6 and at least one fatty acid from a first group (A) and at least one acid from a second group (B) as defined in claims 6 to 12 and where applicable with at least one polycarboxylic acid, in particular dicarboxylic acid as defined in claims 13 to 15, and where applicable there is added to the esterification product obtained a plasticiser compatible with foodstuffs, in particular a copolymer of acrylate or methacrylate or butyl and ethylene or a copolymer of vinyl acetate and ethylene.

33. Coated cheese comprising a coating produced by the method of claims 1 to 17 or as defined in claims 18 to 32.
